Europäisches Patentamt

European Patent Office

Office européen des brevets

(19)

(11) Veröffentlichungsnummer : **0 171 643**
**B1**

(12) **EUROPÄISCHE PATENTSCHRIFT**

(45) Veröffentlichungstag der Patentschrift :
**13.12.89**

(51) Int. Cl.⁴ : **H 04 L 11/16**, H 04 B   3/04

(21) Anmeldenummer : **85109002.7**

(22) Anmeldetag : **18.07.85**

(54) **Verfahren zur Übertragung von Signalen zwischen Datenverarbeitungsgeräten.**

(30) Priorität : **03.08.84 DE 3428766**

(43) Veröffentlichungstag der Anmeldung :
**19.02.86 Patentblatt 86/08**

(45) Bekanntmachung des Hinweises auf die Patenterteilung : **13.12.89 Patentblatt 89/50**

(84) Benannte Vertragsstaaten :
**AT BE CH DE FR GB IT LI NL SE**

(56) Entgegenhaltungen :
**EP--A-- 0 102 225**
**EP--A-- 0 113 231**
**PATENTS ABSTRACTS OF JAPAN, Band 7, Nr. 4 (E-151) [1149], 8. Januar 1983; & JP - A - 57 162 533 (HITACHI SEISAKUSHO K.K.) 06-10-1982**

(73) Patentinhaber : **Siemens Aktiengesellschaft**
**Wittelsbacherplatz 2**
**D-8000 München 2 (DE)**

(72) Erfinder : **Zeiss, Willi, Dipl.-Ing.**
**Saarstrasse 122a**
**D-6744 Kandel (DE)**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung bezieht sich auf ein Verfahren gemäß den Merkmalen des Oberbegriffs des Anspruchs 1.

Ein solches Verfahren ist aus der EP-A-0 113 231 bekannt, bei dem eine Verstärkungseinstellung in einem Bussystem mit einer Anzahl voll gleichberechtigter Teilnehmer, die an eine sogenannte Kopfstation angeschlossen sind, vorgenommen wird. Zur Verstärkungseinstellung wird hier ein Digital-Analog-Konverter und ein Pilotsignal-Generator in der Kopfstation zusätzlich benötigt.

Es ist weiterhin bereits bekannt (« Elektronik », Heft 25, 1983, Seiten 56 bis 62), bei einer Datenübertragung mit Rechtecksignalen zwischen Endgeräten und einer Leitstation eine Entzerrung der durch die Übertragungsleitung hervorgerufenen Signalverzerrungen vorzunehmen. Es ist hier ein adaptives Entzerrungsnetzwerk beschrieben, dessen Filtercharakteristik sich automatisch an die durch die Übertragungsleitung hervorgerufenen Verzerrungen des stark oberwellenhaltigen Rechtecksignals anpaßt. Dieses Entzerrungsnetzwerk ist aus einem relativ aufwendig aufgebauten Orthogonalfilter gebildet, dessen Filtercharakteristik aufgrund einer Signalauswertung des verzerrten Signals und einer daran angeschlossenen Steuereinheit eingestellt wird. Zwar ist auch hier in begrenztem Umfang eine Pegelregelung des Eingangssignals auf einen definierten Wert vorgesehen, jedoch werden nur kurzzeitige Schwankungen in der Amplitude ausgeglichen. Zur Durchführung des Regelvorgangs ist immer das Vorhandensein eines Signals notwendig, wobei der Regelvorgang an sich immer einen gewissen Zeitraum in Anspruch nimmt. Eine konstante, über einen längeren Zeitraum feststehende Kompensation der Pegeldämpfung ist hier nicht vorgesehen.

Der Erfindung liegt somit die Aufgabe zugrunde, auf einfache Weise sicherzustellen, daß bei einer Signalübertragung über unterschiedliche Entfernungen auf einer Übertragungsleitung immer ein konstanter Pegel des empfangenen Signals zur Auswertung zur Verfügung gestellt werden kann.

Zur Lösung dieser Aufgabe weist ein Verfahren der eingangs genannten Art die Merkmale des Kennzeichens des Anspruchs 1 auf. Besonders bei der Datenübertragung über Fernmeldeleitungen werden Signalformen angewendet, die unter Vermeidung von starken Oberwellenanteilen gebildet sind und im Frequenzbereich < 1 MHz liegen. Hier kann eine Übereinstimmung von Sende- und Empfangssignal durch eine frequenzabhängige Verstärkung des Empfängers herbeigeführt werden. Eine äußerst einfache und schnelle Einstellung eines gewünschten Signalpegels läßt sich dadurch erreichen, daß der empfangenden Station vor Beginn der eigentlichen Signalübertragung eine Information darüber übermittelt wird, welche Pegeldämpfung auf dem gerade verwendeten Stück der Übertragungsleitung auftritt. Diese Informationen können beispielsweise Teil eines zu übertragenden Datentelegramms sein, das beispielsweise nach den Normen für die Datenpaketübertragung nach CCITT-X.25 gebildet sein kann. Eine nachteilige Wirkung von Regelzeitkonstanten bei der Einstellung des Pegels tritt hier nicht auf.

Das erfindungsgemäße Verfahren macht eine Ermittlung der Dämpfungswerte in vorteilhafter Weise dadurch möglich, daß ohne zusätzliche Meßgeräte die erforderlichen Verstärkungsfaktoren in einer Lernphase durch schrittweise Erhöhung des Verstärkungsfaktors in den Endgeräten ermittelt werden. In dieser Lernphase kann beispielsweise auf der Basis einer HDLC-Übertragungsprozedur wiederholt der Versuch eines Verbindungsaufbaus vorgenommen werden.

Die Sicherheit bei der Übertragung und Auswertung der Signale kann in vorteilhafter Weise durch eine Berücksichtigung des Störabstandes mit den Merkmalen des Unteranspruchs 2 erhöht werden.

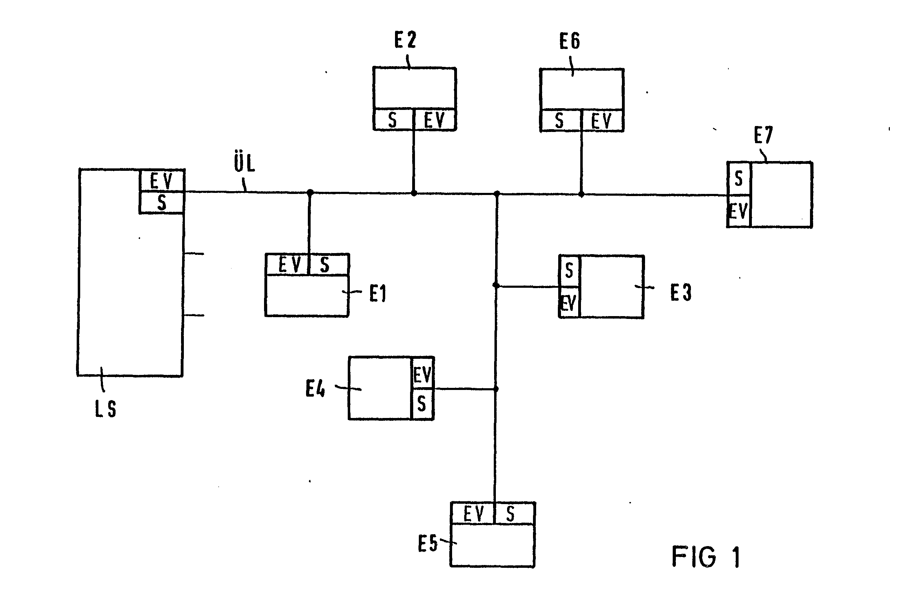

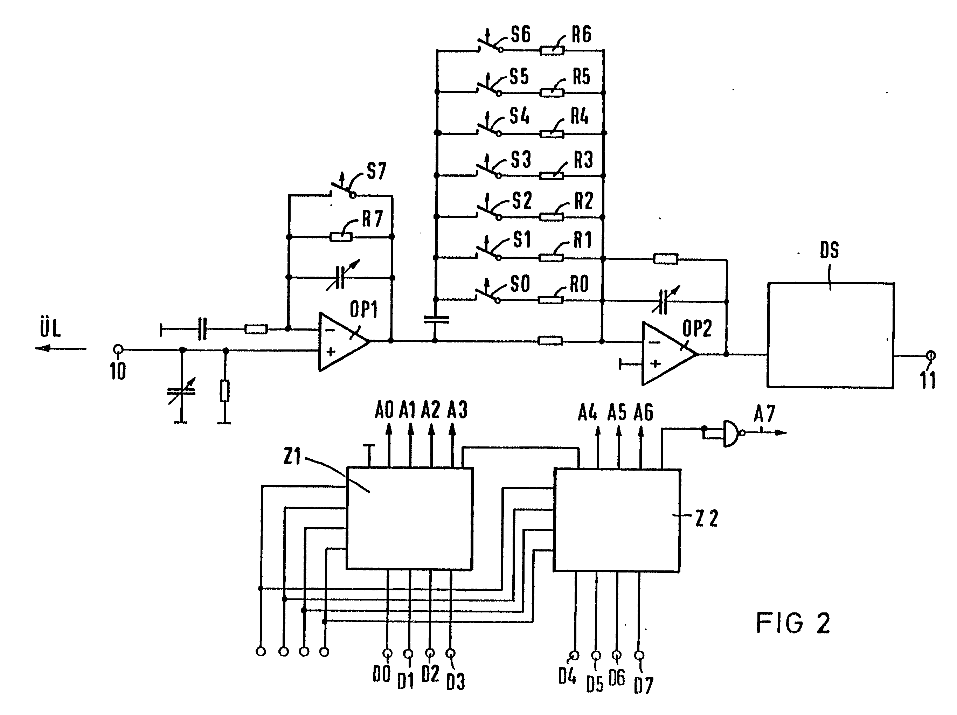

Die Erfindung wird anhand der Figuren erläutert, wobei Figur 1 ein Blockschaltbild eines Ausführungsbeispiels einer Vorrichtung zur Übertragung von Informationen zwischen einer Leitstation und Endgeräten und Figur 2 ein Schaltbild eines adaptiven Empfangsverstärkers in den Endgeräten bzw. der Leitstation darstellen.

Die Figur 1 zeigt eine Leitstation LS, die über eine Übertragungsleitung, insbesondere Fernmeldeleitungen, mit Endgeräten E1 ... E7 verbunden ist. Zur Übertragungsleitung ÜL gehören auch Stichleitungen, die beim dargestellten Ausführungsbeispiel zu den Endgeräten E3, E4, E5 führen. Die Leitstation LS und die Endgeräte E1 ... E7 weisen an ihren Schnittstellen zur Übertragungsleitung ÜL Empfangsverstärker EV und Sender S auf. Eine einwandfreie Übertragung von Datensignalen kann hier nur erfolgen, wenn die Empfangsverstärker EV die für den Teil der verwendeten Übertragungsleitung ÜL notwendige Verstärkung aufweisen. Die zu übertragende Information ist beispielsweise über einen bestimmten gewählten Code (NRZI) in den Flanken eines Signals vorhanden und wird in Pulse mit möglichst geringem Oberwellenanteil (z. B. Glockenpulse mit $\cos^2$-Form) umgesetzt.

Im Empfangsverstärker EV nach Figur 2 gelangt das übertragene Signal von der Übertragungsleitung ÜL auf den Eingang 10 und wird in einem ersten Verstärkerbaustein OP1 verstärkt. Der Verstärkungsfaktor dieses Verstärkerbausteins OP1 kann über einen Schalter S7, der einen Widerstand R7 kurzschließt, beispielsweise zwischen 0 dB (Schalter S7 geschlossen) und 20 dB (Schalter S7 offen) geändert werden. Dem ersten Verstärkerbaustein OP1 folgt ein zweiter Verstärkerbaustein OP2, dessen Verstärkungsfaktor mit einem vorgeschalteten Widerstandsnetzwerk R0 ... R6 und Schaltern S0 ... S6, beispielsweise von 0 bis 20 dB, in sieben Stufen und deren Kombination eingestellt werden kann. Insgesamt ist somit beim dargestellten Ausführungsbeispiel eine Verstärkungseinstellung mit den Verstärkerbausteinen OP1 und OP2 im Bereich von ca. 0 bis 40 dB in 256 Stufen möglich.

Die Schalter S0 ... S7 werden von Zählern (Speicherbausteinen) Z1 und Z2 gesteuert, die an Eingängen D0 ... D7 digitale Daten für die spezifischen Verstärkungswerte erhalten, die beispielsweise Bestandteil von Datentelegrammen sein können oder aber separat eingegeben werden. Neben den für die Funktion der Zähler notwendigen, aber hier nicht näher erläuterten Eingängen RESET, PRESET, UP/DOWN und SERIAL IN weisen die Zähler Z1, Z2 Steuerausgänge A0 ... A7 auf, die die entsprechenden Schalter S0 ... S7 ansteuern. Der für die spezifischen Übertragungswerte des Teils der Übertragungsleitung ÜL notwendige Verstärkungsfaktor kann seriell oder parallel in die Zähler Z1 und Z2 geladen werden, von denen sodann die Schalter S0 ... S7 angesteuert werden. Die parallele Ladbarkeit wird man dann einsetzen, wenn ein Mikroprozessor-Bus als Übertragungsleitung ÜL zur Verfügung steht und häufig eine schnelle Änderung des Verstärkungsfaktors erforderlich ist, z. B. in der Leitstation LS einer Mehrpunktverbindung. Die serielle Variante wird man in den Endgeräten E1 ... E7 einsetzen, weil der Verstärkungsfaktor sich hier während des Betriebs nicht ändert.

Die von den Verstärkerbausteinen OP1 und OP2 auf den definierten Pegel (Größenordnung Sendepegel) gebrachten Signale werden über einen Diskriminator dem Ausgang 11 und somit den weiterverarbeitenden Bausteinen in den Endgeräten E1 ... E7 bzw. der Leitstation LS als Empfangssignal zugeführt.

Für die Ermittlung der spezifischen Verstärkungsfaktoren des Empfangsverstärkers EV gibt es folgende Möglichkeiten. Zum einen kann die Messung der spezifischen Leitungsdämpfung mittels Pegelsender und Pegelmesser durchgeführt werden. Die so ermittelten Werte müßten in das System einzeln eingegeben werden.

Zum anderen kann zunächst von der Leitstation LS in einer festgelegten Zeit der Übertragungsprozedur (HDLC) ein Test-Telegramm ausgesendet werden, währenddessen die Steuereinheit in den Endgeräten den Verstärkungsfaktor « langsam » erhöht, bis das Test-Telegramm verstanden wird und somit der richtige Verstärkungsfaktor in den Endgeräten gefunden ist und abgespeichert werden kann. Die Ermittlung des Verstärkungsfaktors in der Leitstation LS geschieht im Prinzip nach der gleichen Methode ; hier kann der in einer Steuereinheit der Leitstation LS vorhandene Mikrocomputer auf der Basis der verwendeten Datenübertragungsprozedur, beispielsweise HDLC-Prozedur, unter Ausnutzung der gesamten Sende-Empfangsschaltung und der Übertragungsleitung ÜL einen Verbindungsaufbau versuchen. Gelingt dies nicht, erhöht er den Verstärkungsfaktor des Empfangsverstärkers EV über die Zähler Z1 und Z2 um eine Stufe, und es beginnt ein erneuter Versuch. Dies wiederholt sich so lange, bis ein Verbindungsaufbau zustande kommt. Für einen optimalen Störspannungsabstand kann nun der so gefundene Verstärkungsfaktor noch um einen festen Wert korrigiert werden.

Diese Methode der Verstärkungsermittlung läuft automatisch ab und erfordert keine manuelle Tätigkeit bzw. manuellen Eingriffe. Es entsteht auch kein zusätzlicher Geräteaufwand, denn es werden nur ohnehin vorhandene Schaltungsteile in den Endgeräten E1 ... E7 bzw. in der Leitstation LS genutzt.

## Patentansprüche

1. Verfahren zur Übertragung von Signalen zwischen einer Anzahl von an verschiedenen Stellen einer Übertragungsleitung (ÜL) angeschlossenen Datenverarbeitungsgeräten (LS ; E1 ... E7),

bei dem in der empfangenden Station eine Korrektur der durch die Übertragungsleitung (ÜL) hervorgerufenen Dämpfungsverzerrung durchgeführt wird,

dadurch gekennzeichnet,

daß die Datenverarbeitungsgeräte eine Leitstation (LS) und eine Anzahl Endgeräte (E1 ... E7) sind,

daß die frequenzabhängige Verstärkung der Empfangsverstärker (EV) der Datenverarbeitungsgeräte (LS ; E1 ... E7) zur Kompensation der spezifischen Pegeldämpfung der -Übertragungsleitung (ÜL) zwischen der Leitstation (LS) und den jeweiligen Endgeräten (E1 ... E7) vor Beginn der Übertragung in einer Lernphase eingestellt wird,

daß in der Lernphase die Leitstation (LS) ein Testsignal an das jeweilige Endgeräte (E1 ... E7) aussendet, wobei in dem Fall,

daß bei der Auswertung im jeweiligen Endgerät (E1 ... E7) das Testsignal keinen ausreichenden Pegel aufweist, eine Wiederholung der Aussendung des Testsignals durchgeführt wird und gleichzeitig der Verstärkungsfaktor des Empfangsverstärkers (EV) um einen festgelegten Betrag heraufgesetzt wird,

daß die Aussendung des Testsignals so oft durchgeführt wird, bis am Ausgang des entsprechenden Empfangsverstärkers (EV) ein zur Auswertung geeigneter Signalpegel vorhanden ist,

daß in der Lernphase die Leitstation (LS) darüberhinaus einen Verbindungsaufbau zu den jeweiligen Endgeräten (E1 ... E7) anstrebt und für den Fall,

daß kein Antwortsignal von dem jeweiligen Endgerät (E1 ... E7) ausgewertet werden kann, eine Wiederholung des Verbindungsaufbaus durchgeführt wird, wobei gleichzeitig der Verstärkungsfaktor des Empfangsverstärkers (EV) der Leitstation (LS) um einen festgelegten Betrag erhöht wird,

und daß der Versuch eines Verbindungsaufbaus so oft durchgeführt wird, bis am Ausgang des Empfangsverstärkers (EV) ein zur Auswertung geeigneter Signalpegel vorhanden ist,

und daß die so ermittelten Verstärkungsfaktoren in den Datenverarbeitungsgeräten (LS ; E1 ... E7) abgespeichert werden.

2. Verfahren nach Anspruch 1, dadurch gekennzeichnet, daß nach Erreichen des für eine Auswertung ausreichenden Pegels der Verstärkungsfaktor zur Berücksichtigung eines ausreichenden Störabstandes um einen festgelegten Betrag erhöht wird.

## Claims

1. Method for the transmission of signals between a number of computer terminals (LS ; E1 ... E7) connected to a transmission line (UL) at different points,

in which the attenuation distortion caused by the transmission line (UL) is corrected in the receiving terminal,
characterised in that

the computer terminals consist of a control terminal (LS) and a number of data terminals (E1 ... E7),

the frequency-dependant gain of the receiving repeaters (EV) of the computer terminals (LS ; E1 ... E7) is set in an adaptive phase, prior to commencement of transmission, to compensate the specific level attenuation of the transmission line (UL) between the control terminal (LS) and each of the data terminals (E1 ... E7),

in the adaptive phase the control terminal (LS) transmits a test signal to the particular data terminal (E1 ... E7) whereby, in the event that

in the evaluation in the particular data terminal (E1 ... E7), the test signal level is not sufficient, transmission of the test signal is repeated and the amplification factor of the receiving repeater (EV) is simultaneously raised by a predetermined amount,

transmission of the test signal is repeated until a signal level appropriate for evaluation exists at the output of the particular receiving repeater (EV),

in the adaptive phase the control terminal (LS) also seeks to establish a connection with the relevant data terminals and, in the event that (E1 ... E7)

no response signal can be evaluated from the particular data terminal (E1 ... E7), establishment of the connection is repeated, the amplification factor of the receiving repeater (EV) of the control terminal (LS) being simultaneously raised by a predetermined amount

establishment of a connection is attempted until a signal level appropriate for evaluation exists at the output of the receiving repeater (EV), and the amplification factors determined thus are stored in memory in the computer terminals (LS ; E1 ... E7).

2. Method as in Claim 1, characterised in that following attainment of the level sufficient for an evaluation, the amplification factor is raised by a predetermined amount in order to allow a sufficient signal-to-noise ratio.

## Revendications

1. Procédé pour transmettre des signaux entre plusieurs appareils de traitement de données (LS ; E1 ... E7), raccordés en différents emplacements d'une ligne de transmission (UL), et

selon lequel on réalise, dans le poste récepteur, une correction de la distorsion d'affaiblissement provoquée par la ligne de transmission (UL), caractérisé par le fait

que les appareils de traitement de données sont constitués par un poste pilote (LS) et un certain nombre d'appareils terminaux (E1 ... E7),

que l'amplification, qui dépend de la fréquence, dans les amplificateurs de réception (EV) des appareils de traitement de données (LS ; E1 ... E7) est réglée avant le début de la transmission dans une phase d'adaptation, pour réaliser la compensation de l'affaiblissement spécifique du niveau dans la ligné de. transmission (UL) entre le poste pilote (LS) et les appareils terminaux respectifs (E1 ... E7),

que pendant la phase d'adaptation, le poste pilote (LS) envoie un signal d'essai à l'appareil terminal respectif (E1 ... E7), auquel cas

lorsque, dans le cas de l'évaluation réalisée dans l'appareil terminal respectif (E1 ... E7), le signal d'essai ne possède pas un niveau suffisant, une répétition de l'émission du signal d'essai est exécutée et, simultanément, le facteur d'amplification de l'amplificateur de réception (EV) est accru d'une valeur fixe,

que l'émission du signal d'essai est réalisée d'une manière suffisamment fréquente pour qu'il apparaisse, à la sortie de l'amplificateur de réception correspondant (EV), un niveau de signal convenant pour l'évaluation,

que, pendant la phase d'adaptation, le poste pilote (LS) s'efforce en outre d'établir une liaison avec les appareils terminaux respectifs (E1 ... E7), et dans le cas où

aucun signal de réponse ne peut être évalué par l'appareil terminal respectif (E1 ... E7), une répétition de l'établissement de la liaison est exécutée, auquel cas simultanément le facteur d'amplification de l'amplificateur de réception (EV) du poste pilote (LS) est accru d'une valeur fixe,

et que la tentative d'établissement d'une liaison est exécutée suffisamment souvent pour qu'un niveau de signal approprié pour l'évaluation apparaisse à la sortie de l'amplificateur de réception (EV).

2. Procédé suivant la revendication 1, caractérisé par le fait qu'une fois atteint le niveau suffisant pour une évaluation, le facteur d'amplification est accru d'une valeur fixée, pour tenir compte d'un rapport signal/bruit suffisant.

FIG 1

FIG 2